# EUROPEAN PATENT SPECIFICATION

(11) **EP 4 033 562 B1**
(45) Date of publication and mention of the grant of the patent: **28.01.2026**
(21) Application number: 21776465.3
(22) Date of filing: 23.03.2021
(51) Int. Cl.: H01M 4/13, H01M 4/74, H01M 4/66, H01M 4/38, H01M 4/36, H01M 4/139, H01M 4/04, H01M 10/052, H01M 4/587, H01M 4/58, H01M 4/1397, H01M 4/1393, H01M 4/136, H01M 4/133, H01M 4/02

(54) **LITHIUM SECONDARY BATTERY ELECTRODE COMPRISING PERFORATED CURRENT COLLECTOR, MANUFACTURING METHOD THEREFOR, AND LITHIUM SECONDARY BATTERY COMPRISING ELECTRODE**
LITHIUM-SEKUNDÄRBATTERIEELEKTRODE MIT PERFORIERTEM STROMABNEHMER, HERSTELLUNGSVERFAHREN DAFÜR UND LITHIUM-SEKUNDÄRBATTERIE MIT ELEKTRODE
ÉLECTRODE DE BATTERIE SECONDAIRE AU LITHIUM COMPRENANT UN COLLECTEUR DE COURANT PERFORÉ, PROCÉDÉ DE FABRICATION ASSOCIÉ ET BATTERIE SECONDAIRE AU LITHIUM COMPRENANT L'ÉLECTRODE

(30) Priority: 27.03.2020 KR 20200037717; 20.08.2020 KR 20200104338
(43) Date of publication of application: 27.07.2022
(73) Proprietor: LG ENERGY SOLUTION, LTD., Seoul 07335 (KR)
(72) Inventor: HONG, Kyungsik, Daejeon 34122 (KR); KIM, Minsu, Daejeon 34122 (KR)
(74) Representative: Hoffmann Eitle
(86) International application number: PCT/KR2021/003592
(87) International publication number: WO 2021/194230

(56) References cited:
- EP-B1- 2 727 171
- JP-A- 2012 146 395
- JP-A- 2012 169 200
- JP-B2- 5 293 383
- KR-A- 20130 125 919
- KR-A- 20130 125 919
- KR-A- 20160 144 756
- KR-A- 20160 144 756
- KR-B1- 101 745 974
- US-A1- 2020 052 279

## Description

### [Technical Field]

The present application claims the benefits of priorities based on Korean Patent Application No. 10-2020-0037717 filed on March 27, 2020 and Korean Patent Application No. 10-2020-0104338 filed on August 20, 2020.

The present invention relates to an electrode for a lithium secondary battery comprising a perforated current collector, a method of manufacturing the same, and a lithium secondary battery comprising the electrode, and more particularly, to an electrode for a lithium secondary battery comprising a perforated current collector, which is capable of allowing bonding between active materials through perforations of the perforated current collector while improving the energy density of a battery due to weight reduction even if the wet process and the electrically conductive material and the binder, which are essential components of the existing electrode mixture, are excluded, and a method of manufacturing the same, and a lithium secondary battery comprising the electrode.

### [Background Art]

Recently, there is increasing interest in energy storage technology. As the application area thereof extends to the energy for mobile phones, camcorders, notebook PCs, and even electric vehicles, the effort of research and development of electrochemical devices is being carried out concretely. Electrochemical devices are the most noteworthy area in this respect, and among them, the development of secondary batteries such as a lithium-sulfur battery capable of charging/discharging is the focus of attention. Recently, in developing these batteries, research and development on the design of new electrodes and batteries have been conducted in order to improve capacity density and specific energy.

Among these electrochemical devices, for example, a lithium secondary battery, a lithium-sulfur (Li-S) battery, in which sulfur (S) is applied as a positive electrode, has a high energy density and thus is in the spotlight as a next-generation secondary battery that can replace the lithium-ion battery. However, such a lithium secondary battery such as a lithium-sulfur battery comprises an electrically conductive material and a binder in the positive electrode and also comprises an active material, an electrically conductive material, and a metal current collector to which a positive electrode mixture including the binder is applied, and thus is inevitably increased in weight, and such an increase in weight leads to a decrease in the energy density of the battery.

In the art, as a solution to these problems, there are efforts to reduce the weight of the current collector in the configuration of the positive electrode. That is, in order to reduce the weight of the current collector, there has been a study to apply a thin current collector to the positive electrode, as compared to the existing current collector. However, it was pointed out that there is a limit to reducing the thickness to such an extent that a remarkable reduction in weight is possible. In addition, cases of reducing the weight of the positive electrode or battery by fabricating a perforated metal foil current collector or a mesh-type current collector have also been reported, but it was found that it was difficult to increase the energy density of the battery with these alone. In addition, when the electrode is manufactured by slurry coating (i.e. wet process) using a perforated current collector, since there is a problem that the slurry flows to the bottom through the pores, there is also a problem that there is a restriction in controlling the opening ratio or the viscosity of the slurry. In addition, when the electrode process is carried out by slurry coating, that is, a wet process, there are a problem due to moisture remaining in the electrode and a problem of incurring costs due to mixing, coating and drying processes.

On the other hand, in the case of manufacturing the electrode by the dry process, there are restrictions on the change of the type and content of the binder, and in order to manufacture the double-sided electrode, there arises a problem that the process becomes complicated, for example, a lamination process and a coating process to impart adhesion to the current collector must be accompanied. In addition, an electrically conductive material and a binder, which are generally used to improve the conductivity of the electrode and impart adhesion, are also one of the main factors that reduce the energy density of the battery. In particular, since the binder also acts as a resistance element, it is desirable to use the electrically conductive material and the binder to the minimum within a range that does not deteriorate the physical properties.

Looking at the above descriptions comprehensively, a plan should be devised to exclude the wet process, while using a perforated current collector that can reduce the weight of the current collector, and also minimize the use of an electrically conductive material and a binder that reduce the energy density of the battery.

JP 2012-169200A relates to a nonaqueous electrolyte battery electrode comprising a current collector and powder compacts containing active material powder which are provided on both sides of the current collector, the current collector is composed with a mesh made of a magnetic material, and the powder compacts are formed as an integral body through openings in the mesh of the current collector.

US 2020/0052279 A1 relates to a method to preparing an energy storage electrode formed by heat-pressing preformed electrode membranes into the pore structures of a metal mesh current collector without use of any solvents.

### [Disclosure]

### [Technical Problem]

It is an object of the present invention to provide an electrode for a lithium secondary battery comprising a perforated current collector, which is capable of allowing bonding between active materials through perforations of the perforated current collector and at the same time, improving the energy density of a battery due to weight reduction even if the wet process and the electrically conductive material and binder, which are essential components of the existing electrode mixture, are excluded, and a method of manufacturing the same, and a lithium secondary battery comprising the electrode.

### [Technical Solution]

The invention is set out in the appended set of claims.

In order to achieve the above object, the present invention provides an electrode for a lithium secondary battery comprising a first electrode active material layer, a second electrode active material layer, and a perforated current collector interposed between the first electrode active material layer and the second electrode active material layer, wherein the first electrode active material layer and the second electrode active material layer are combined through perforations of the current collector, characterized in that the electrode for the lithium secondary battery does not contain an electrically conductive material and a binder, and the first and second electrode active material layers contain sulfur (S).

In addition, the present invention provides a method of manufacturing the above electrode for a lithium secondary battery comprising the steps of (a) filling the mold with an appropriate amount of an electrode active material, and then placing a perforated current collector on top of it and filling the electrode active material on top of it again; (b) applying pressure to the complex of the electrode active material filled in the mold and the current collector; and (c) separating the pressure-applied complex from the mold.

In addition, the present invention provides a lithium secondary battery comprising at least one electrode for the lithium secondary battery.

### [Advantageous Effects]

According to the electrode for the lithium secondary battery comprising the perforated current collector according to the present invention, the method of manufacturing the same, and the lithium secondary battery comprising the electrode, the active materials are bonded to each other through perforations of the perforated current collector whose weight is reduced compared to the conventional current collector, and at the same time, the mixing, coating and drying processes that were performed during the wet process were omitted by applying the dry process instead of the wet process. Accordingly, there is an advantage that when manufacturing the electrode through the dry process, problems caused by the existing wet process such as a problem due to moisture remaining in the electrode and a problem of cost incurred by mixing, coating and drying processes are eliminated.

Also, according to the electrode for the lithium secondary battery comprising the perforated current collector according to the present invention, the method of manufacturing the same, and the lithium secondary battery comprising the electrode, there is an advantage that it is possible to improve the energy density of the battery due to weight reduction even when using the perforated current collector and at the same time, excluding electrically conductive material and binder, which are essential components of the existing electrode mixture. In addition, there is an advantage that since the electrode can be easily manufactured independently through the mold of the electrode shape according to the footprint (that is, the electrode punching process is unnecessary because it is manufactured in a single process), it is possible to reduce the loss of the electrode caused by punching the electrode by the existing roll to roll method.

### [Description of Drawings]

FIG. 1 is a schematic cross-sectional side view of the electrode for the lithium secondary battery comprising the perforated current collector according to an embodiment of the present invention.
FIG. 2 is an image showing a state in which an adhesion area between active materials is formed in the electrode for the lithium secondary battery comprising the perforated current collector according to an embodiment of the present invention.
FIG. 3 is an image showing a state in which an electrode for a lithium secondary battery is manufactured using a mold and a press according to the present invention.
FIG. 4 (a) is a real image of the mold, FIG. 4 (b) is a real image of the perforated aluminum foil current collector, and FIG. 4 (c) is a real image of the electrode manufactured through the mold.
FIG. 5 is a graph comparing discharging capacities of lithium-sulfur batteries according to an example of the present invention and comparative examples.

### [Best Mode]

Hereinafter, the present invention will be described in detail with reference to the accompanying drawings.

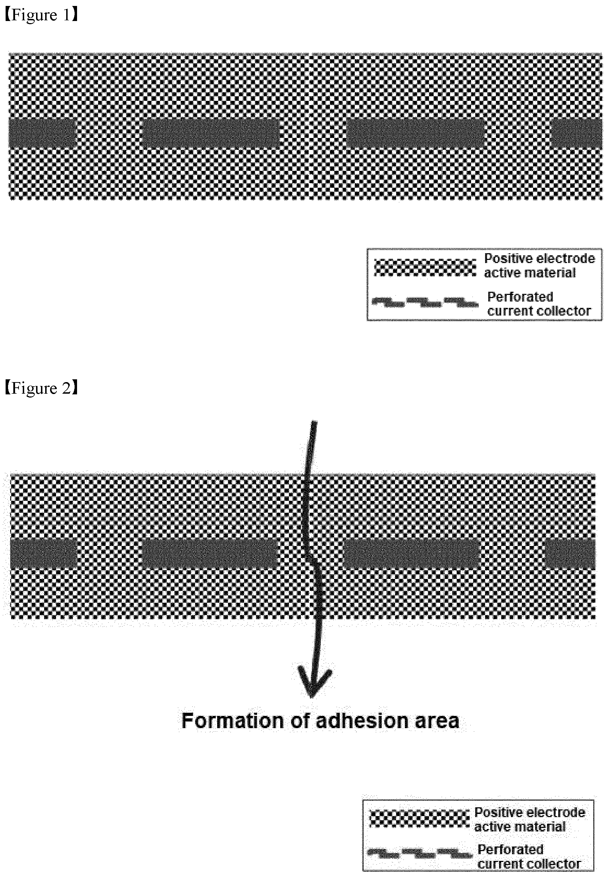

FIG. 1 is a schematic cross-sectional side view of the electrode for the lithium secondary battery comprising the perforated current collector according to an embodiment of the present invention. As shown in FIG. 1, the electrode for the lithium secondary battery comprising the perforated current collector according to the present invention comprises a first electrode active material layer, a second electrode active material layer, and a perforated current collector interposed between the first electrode active material layer and the second electrode active material layer, wherein the first electrode active material layer and the second electrode active material layer are combined through perforations of the current collector, characterized in that the electrode for the lithium secondary battery does not contain an electrically conductive material and a binder, and the first and second electrode active material layers contain sulfur (S).

A lithium secondary battery contains an active material, an electrically conductive material and a binder as well as a metal current collector in the electrode, and accordingly, its weight is inevitably increased. Such an increase in weight leads to a decrease in the energy density of the battery. Accordingly, in the art, efforts to improve the energy density of the lithium secondary battery by reducing the thickness of the current collector, making the current collector in a perforated form or so forth are being continued, but a clear solution has not yet been proposed. In addition, if the general wet process is applied during electrode manufacturing, since a problem due to moisture remaining in the electrode and a problem of cost incurred by mixing, coating and drying processes occur, and the electrically conductive material and the binder are also one of the main factors that reduce the energy density of the battery (especially, the binder also acts as a resistance element), it is preferable to exclude the wet process and use the electrically conductive material and binder to the minimum within a range that does not degrade physical properties.

Accordingly, the applicant of the present invention has repeatedly conducted researches from various angles in order to solve the above problems, and as a result, has completed a technology of replacing the wet process with a dry process and also excluding the electrically conductive material and the binder that reduce the energy density of the battery, even while using a perforated current collector capable of reducing the weight of the current collector. This invention can be said to be the original invention of the present applicant, which has not been found so far. Hereinafter, the present invention will be described in more detail.

First, the perforated current collector is used to reduce its own weight (moreover, to reduce the weight of the electrode and battery) and is used for flexible bonding (or adhesion) between active materials. As shown in FIG. 1, the perforated current collector may be a perforated metal foil (thin foil), or a perforated conductive film or conductive sheet. There is no particular limitation on the number of holes formed through perforation, but it is desirable to form the holes appropriately to meet the purpose, in view of the degree of weight reduction of the current collector, and the degree of bonding between the surface (or outer surface) of the current collector and the electrode active material coated in the perforations (or inner surface). For example, the area occupied by the holes may be 25 to 90%, preferably 40 to 70% of the total area.

There is no particular limitation on the size of the holes formed through the perforation, and likewise, it is desirable to form the holes in an appropriate size to meet the purpose, in view of the degree of weight reduction of the current collector, and the degree of bonding between the surface of the current collector and the electrode active material coated in the perforations. However, in order to maintain the bonding force between active materials above a certain level, the holes may be formed in a size of 100 *µ*m to 1 cm, preferably 100 to 1,000 *µ*m, more preferably 100 to 500 *µ*m. In addition, the thickness of the perforated current collector is also not particularly limited, and the thickness of a general current collector commonly used in the art may be applied mutatis mutandis.

The perforated current collector may be a perforated metal foil, film or sheet, as described above, and examples of the metal comprise a metal used as a conventional metal current collector, such as aluminum (Al), nickel (Ni), stainless steel (SUS; Steel Use Stainless), copper (Cu), iron (Fe), titanium (Ti), vanadium (V), and mixtures thereof, and it may be preferable to use aluminum among the metals exemplified above, in view of the low density and high electrochemical stability.

Next, the electrode active materials (first electrode active material and second electrode active material) coated on the surface and perforations of the current collector can also be used without particular limitation as long as they are commonly used in the art and the active material layers contain sulfur (S).When pressure is applied to sulfur (S), since the sulfur itself has the characteristics of being compressed and shaped (pelletized), sulfur is comprised as an active material, in view of the characteristics of the present invention using a mold (i.e. means that satisfy the pressure application condition). In addition, since the present invention does not use a binder (i.e. excluded), sulfur, which is compressed and shaped upon application of pressure, is applied as the active material, even when considering other characteristics of the present invention in which adhesion between active materials must be made through perforations of the perforated current collector.

Accordingly, the electrode active material of the present invention may preferably be a positive electrode active material, and thus, the first electrode active material may preferably be a first positive electrode active material, and the second electrode active material may preferably be a second positive electrode active material.

On the other hand, it may be more desirable to incorporate a sulfur-carbon composite, which is effective in improving the charge/discharge capacity and lifetime of the lithium secondary battery, into the active material. The porous carbon material is a carbon-based material having porosity and conductivity, and any porous carbon material may be used as long as it is commonly used in the art.

For example, the porous carbon material may comprise at least one selected from the group consisting of graphite; graphene; carbon black such as Denka black, acetylene black, Ketjen black, channel black, furnace black, lamp black, and thermal black; carbon nanotube (CNT) such as single-wall carbon nanotube (SWCNT) and multi-wall carbon nanotube (MWCNT); carbon fibers such as graphite nanofiber (GNF), carbon nanofiber (CNF), and activated carbon fiber (ACF); graphite such as natural graphite, artificial graphite, and expanded graphite; carbon nanoribbons; carbon nano belt, carbon nano rod and activated carbon. Preferably, the porous carbon material may comprise at least one selected from the group consisting of single-wall carbon nanotube, multi-wall carbon nanotube, and carbon nanofiber.

The sulfur may comprise at least one selected from the group consisting of inorganic sulfur, Li₂Sₙ(n≥1), disulfide compounds, organosulfur compounds, and carbon-sulfur polymers. The sulfur is located on at least one of the inner and outer surfaces of the porous carbon material. At that time, the sulfur may be present in an area of less than 100%, preferably 1 to 95%, and more preferably 60 to 90% of the entire inner and outer surfaces of the porous carbon material. When the sulfur is present on the inner and outer surfaces of the porous carbon material within the above range, the maximum effect may be exhibited in terms of an electron transfer area and wettability with an electrolyte. Specifically, since the sulfur is thinly and evenly impregnated on the inner and outer surfaces of the porous carbon material in the above range area, the electron transfer contact area may be increased during the charging/discharging process. If the sulfur is located in an area of 100% of the entire inner and outer surface of the porous carbon material, since the carbon material is completely covered with sulfur, there may be a problem that the wettability to the electrolyte is lowered.

In the present invention, the sulfur may have an average diameter of 1 nm to 1 *µ*m, preferably 1 nm to 100 nm, and thus may be coated with a thickness of 1 to 10 nm on the inside and the surface of the porous carbon material. The porous carbon material may be contained in an amount of 10 to 50% by weight, preferably 20 to 40% by weight, based on the total weight of the sulfur-carbon composite. Accordingly, the sulfur may be contained in an amount of 50 to 90% by weight, preferably 60 to 80% by weight, based on the total weight of the sulfur-carbon composite. That is, the weight ratio of the porous carbon material and sulfur in the sulfur-carbon composite may be 60:40 to 80:20, preferably 65:35 to 75:25. However, this is only an example, and if it is possible to improve the performance of the positive electrode or the battery, there may be no particular limitation on the range.

Meanwhile, the sulfur-carbon composite may be preferably in a form in which sulfur is supported on a porous carbon material such as carbon nanotubes or graphene. In addition, the sulfur-carbon composite may also have a form in which sulfur is supported on carbon nanotubes and graphene is additionally attached to the outer wall of the carbon nanotubes on which sulfur is supported. Here, the sulfur is preferably a particulate elemental sulfur. In the present invention, the fact that sulfur is supported on the carbon nanotube may encompass a state in which sulfur is attached or coated on the surface of the carbon nanotube, a state in which sulfur is attached, filled, or coated on the inside of the carbon nanotube, a state in which sulfur is penetrated and adhered between carbon nanotubes, and so forth.

According to one embodiment of the present invention, the manner in which sulfur is supported on the carbon nanotube bundle may vary depending on a method of preparing an electrode active material (preferably a positive electrode active material). As a non-limiting example, when sulfur is applied in the form of particles, sulfur may be included in a state attached to the surface of the outer wall of the carbon nanotube bundle. In addition, as a non-limiting example, when sulfur is dissolved in a solvent and applied in a liquid state, sulfur may be comprised in a state in which the sulfur is sucked into the carbon nanotube bundle through a capillary phenomenon, thereby filling the inside of the carbon nanotube bundle or forming a coating layer on the surface of the inner and outer walls.

The electrode for the lithium secondary battery comprising the perforated current collector according to the present invention mainly comprises only the perforated current collector described above, and an electrode active material coated on the surface and perforations of the perforated current collector, and is characterized by excluding an electrically conductive material and a binder. That is, in the present invention, since the electrode active material forms the bonding area (adhesion area) through perforations of the perforated current collector and bonding (adhesion) between active materials is possible, high electrode adhesion can be secured without adhesion between current collector and active material by not using a binder (adhesion force can be adjusted by adjusting the porosity of the electrode (applied pressure) and the opening ratio of the perforated current collector). FIG. 2 is an image showing a state in which an adhesion area between active materials is formed in the electrode for the lithium secondary battery comprising the perforated current collector according to an embodiment of the present invention. As shown in FIG. 2, it can be seen that the electrode active material forms a bonding area (adhesion area) through perforations of the perforated current collector, and it is possible to bond between active materials.

That is, the present invention dramatically reduces the weight of the positive electrode by using a perforated current collector and at the same time, excluding the electrically conductive material and binder which are essential components of the existing electrode mixture, and thus, it can be of great significance that the energy density of the battery has also been remarkably improved. In addition, since the electrode for the lithium secondary battery comprising the perforated current collector of the present invention is manufactured through a dry process rather than a wet process, it also has the advantage that moisture does not remain in the electrode.

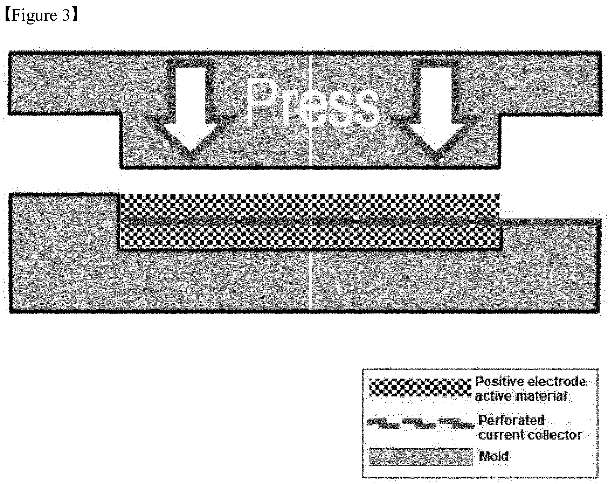

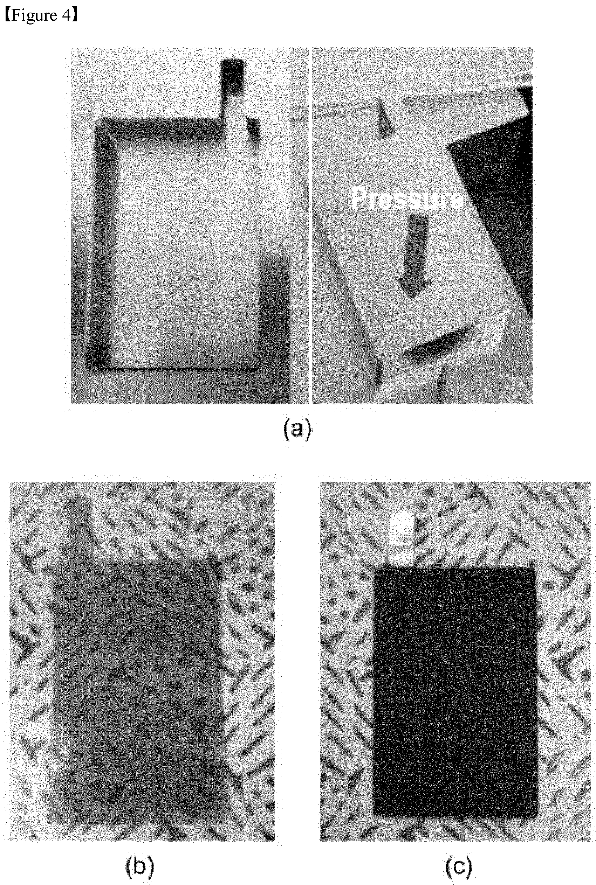

Next, a method of manufacturing an electrode for a lithium secondary battery comprising a perforated current collector will be described with reference to FIGs. 3 and 4. FIG. 3 is an image showing a state in which an electrode for a lithium secondary battery is manufactured using a mold and a press according to the present invention. FIG. 4 (a) is a real image of the mold, FIG. 4 (b) is a real image of the perforated aluminum foil current collector, and FIG. 4 (c) is a real image of the electrode manufactured through the mold. The method of manufacturing the electrode for the lithium secondary battery comprising the perforated current collector according to the present invention comprises the steps of (a) filling the mold with an appropriate amount of an electrode active material, and then placing a perforated current collector on top of it and filling the electrode active material on top of it again, (b) applying pressure to the complex of the electrode active material filled in the mold and the current collector and (c) separating the pressure-applied complex from the mold.

The mold may be a general mold made of a material that can accommodate the electrode active material in the concave portion and does not cause deformation even when pressure is applied. In the present invention, a concave portion (or an accommodating portion for an active material) adapted to the dimension of a target electrode may be formed. Step (a) is a process of filling the mold with an appropriate amount of an electrode active material (the first filling), and then placing a perforated current collector on top of it and filling the electrode active material on top of it again (the second filling). The appropriate amount at the time of first filling may mean an amount that is filled by about half of the height of the concave portion in the mold, in view of the part where the perforated current collector is located in the electrode.

However, in the case of placing the perforated current collector biased in either direction on the basis of the height direction of the electrode, electrode active material may be filled to less than or more than half the height of the concave portion in the mold. Therefore, the second filling may be such that the additional electrode active material reaches or approaches the top of the concave portion in the mold. However, when considering stable adhesion between the electrode active materials through perforations of the perforated current collector, it is preferable that the perforated current collector is located in the center of the electrode in the height direction. Therefore, in this case, it is preferable to set the amount of the electrode active material to be filled first and the amount of electrode active material to be filled second equally (that is, the electrode active material to be filled first and the electrode active material to be filled second are respectively filled with the same amount).

Step (b) is a process of applying a certain pressure to the complex of the electrode active material filled in the mold and the perforated current collector, and the time to apply the pressure may by several seconds to tens of seconds, preferably 1 to 10 seconds, more preferably 3 to 7 seconds. In addition, since the porosity of the electrode is determined depending on the pressure applied to the complex, the pressure may be different according to the porosity of the electrode to be manufactured, and may be, for example, 5 to 50 MPa. In addition, during the pressurization in step (b), heating may also be performed. In addition, the description of the perforated current collector and the electrode active material is replaced by what was previously mentioned in the section of the electrode for lithium secondary battery.

As described above, since the method of manufacturing the electrode for the lithium secondary battery according to the present invention (comprising the perforated current collector) uses a dry process, but does not use a roll-to-roll process, and also excludes an electrically conductive material and a binder, the electrode can be manufactured very simply and easily while using the perforated current collector.

In this regard, conventionally, a positive electrode was manufactured through a wet/roll-to-roll process or a dry/roll-to-roll process. More specifically, the manufacturing of the electrode through the wet/roll-to-roll process is accomplished through a process of mixing an active material, an electrically conductive material, a binder, and a solvent to prepare a slurry, and roll-to-roll coating and drying the slurry on a current collector, and then rolling and punching according to the designed thickness. In addition, the manufacturing of the electrode through the dry/roll-to-roll process is accomplished through a process of pre-mixing (pre-mixing or dry mixing) an active material, an electrically conductive material and a binder, and preparing a standing free electrode in a manner similar to extrusion through a roll, and then coating a thermoplastic resin on the current collector to impart adhesion force, laminating the prepared standing free electrode on both sides, and manufacturing and punching a double-sided electrode.

As described above, the manufacturing of the electrode according to the prior art had to go through a very cumbersome process, and in particular, in the case of using a perforated current collector as in the present invention, when applying the wet process, since the slurry flows down through perforations, there were restrictions on the control of the opening ratio and the viscosity of the slurry, and when applying the dry process, there were many restrictions that a binder must be used in order to maintain the structure of the electrode and so forth.

However, in the method of manufacturing an electrode for a lithium secondary battery according to the present invention, a dry process is applied instead of a wet process, so that the mixing, coating and drying processes performed during the wet process are omitted. Accordingly, problems caused by the existing wet process, such as a problem due to moisture remaining in the electrode, and a problem of cost incurred due to mixing, coating, and drying processes, have been eliminated. In addition, since it is possible to independently manufacture the electrode used for the pouch cell and the like through the mold of the shape of the electrode according to the footprint (that is, the electrode punching process is unnecessary since rolling is carried out in a single process), there is an advantage that it can also reduce the loss of electrode that occurred by punching the electrode in the existing roll to roll method.

Finally, referring to the lithium secondary battery according to the present invention, the lithium secondary battery includes at least one electrode for a lithium secondary battery described above, and the lithium secondary battery may be a lithium-based secondary battery such as a lithium-sulfur battery, a lithium metal battery, and a lithium air battery, but a lithium-sulfur battery may be most preferred. Meanwhile, the electrode for the lithium secondary battery may be a positive electrode or a negative electrode, but it may be preferable to be a positive electrode in consideration of the bonding force between active materials. Meanwhile, the separator and the electrolyte interposed between the electrodes may be conventional ones used in the art, and a detailed description thereof will be given below.

### Separator

The separator is interposed between the positive electrode and the negative electrode to prevent a short circuit therebetween and serves to provide a passage for the movement of lithium ions. As the separator, olefin-based polymers such as polyethylene and polypropylene, glass fibers, etc. may be used in the form of a sheet, a multi-membrane, a microporous film, a woven fabric or a non-woven fabric, but are not limited thereto. On the other hand, when a solid electrolyte such as a polymer (e.g. organic solid electrolyte, inorganic solid electrolyte, etc.) is used as the electrolyte, the solid electrolyte may also serve as a separator. Specifically, an insulating thin film having high ion permeability and mechanical strength is used. The separator may generally have a pore diameter of 0.01 to 10 *µ*m, and a thickness of 5 to 300 *µ*m.

### Electrolyte

The electrolyte or electrolyte solution is a non-aqueous electrolyte solution (non-aqueous organic solvent), and carbonate, ester, ether, or ketone may be used alone or in combination of two or more, but is not limited thereto. For example, aprotic organic solvents such as dimethyl carbonate, diethyl carbonate, dipropyl carbonate, methylpropyl carbonate, ethylpropyl carbonate, methylethyl carbonate, ethylene carbonate, propylene carbonate, butylene carbonate, γ-butylolactone, n-methyl acetate, n-ethyl acetate, n-propyl acetate, phosphoric acid triester, dibutyl ether, N-methyl-2-pyrrolidinone, 1,2-dimethoxy ethane, tetrahydrofuran, tetrahydrofuran derivatives such as 2-methyl tetrahydrofuran, Dimethylsulfoxide, formamide, dimethylformamide, dioxolane and derivatives thereof, acetonitrile, nitromethane, methyl formate, methyl acetate, trimethoxy methane, sulfolane, methyl sulfolane, 1,3-dimethyl-2-imidazolidinone, methyl propionate, ethyl propionate may be used, but is not limited thereto.

A lithium salt may be further added to the electrolyte solution (so-called, a non-aqueous electrolyte solution containing a lithium salt), and the lithium salt may be a well-known one that is easily dissolved in a non-aqueous electrolyte solution, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₃(CF₂CF₃)₃, LiAlCl₄, CH₃SO₃Li, CF₃SO₃Li, (CF₃SO₂)₂NLi, lithium chloroborane, lithium lower aliphatic carboxylic acid, lithium tetraphenyl borate, lithium imide, and the like, but are not limited thereto.

To the (non-aqueous) electrolyte solution, for example, pyridine, triethylphosphite, triethanolamine, cyclic ether, ethylene diamine, n-glyme, hexamethyl phosphoric triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like may be added for the purpose of improving charging/discharging characteristics, flame retardancy and the like. If necessary, a halogen-containing solvent such as carbon tetrachloride or ethylene trifluoride may be further added to impart non-flammability, or carbon dioxide gas may be further added to improve high-temperature storage characteristics.

Meanwhile, the lithium secondary battery of the present invention may be manufactured according to a conventional method in the art. For example, the lithium secondary battery can be manufactured by placing a porous separator between the positive electrode and the negative electrode and adding a non-aqueous electrolyte solution. The lithium secondary battery according to the present invention can be applied to a battery cell used as a power source for a small device and also can be particularly and suitably used as a unit cell of a battery module, which is a power source for medium and large-sized devices. In this aspect, the present invention also provides a battery module comprising two or more lithium secondary batteries electrically connected (series or parallel). Of course, the quantity of lithium secondary batteries comprised in the battery module may be variously adjusted in consideration of the use and capacity of the battery module.

Furthermore, the present invention provides a battery pack in which the battery modules are electrically connected according to a conventional technique in the art. The battery module and the battery pack may be used as a power source for any one or more medium and large-sized devices among a power tool; electric vehicles including electric vehicle (EV), a hybrid electric vehicle (HEV), and a plug-in hybrid electric vehicle (PHEV); electric truck; electric commercial vehicles or power storage systems, but are not limited thereto.

### [Mode for Invention]

Hereinafter, preferred examples of the present invention will be described in order to facilitate understanding of the present invention. It will be apparent to those skilled in the art, however, that the following examples are only illustrative of the present invention as defined in the appended claims.

### [Example 1] Preparation of positive electrode for lithium secondary battery using perforated current collector

First, after filling the sulfur-carbon nanotube composite (positive electrode active material, Cnano Technology company, China) in which sulfur and carbon nanotubes are mixed in a weight ratio of 70:30, up to about half of the concave portion of the mold footprinted in the shape of a positive electrode, and then a perforated aluminum foil current collector (Dexmet company, USA) was placed on the top thereof, and the sulfur-carbon nanotube composite having the same composition as the above positive electrode active material was fully filled again on the top thereof. Subsequently, a pressure of 10 MPa was applied to the complex of the positive electrode active material filled in the mold and the current collector for 5 seconds using a press (Qmesys company, Korea), and the complex to which the pressure was applied was separated from the mold to prepare a positive electrode for a lithium secondary battery.

### [Comparative Example 1] Preparation of positive electrode for lithium secondary battery using conventional metal current collector

87% by weight of a sulfur-carbon nanotube composite in which sulfur and carbon nanotubes are mixed in a weight ratio of 70:30 (positive electrode active material, Cnano Technology company, China), 5% by weight of carbon fiber as an electrically conductive material (VGCF, manufactured by Showa Denko company), and 7% by weight of lithium polyacrylate and 1% by weight of polyvinyl alcohol as a binder were mixed to prepare a positive electrode slurry composition. Subsequently, the slurry composition prepared above was applied to both surfaces of an aluminum current collector and dried at 50°C for 12 hours to prepare a positive electrode for a lithium secondary battery.

### [Comparative Example 2] Preparation of positive electrode for lithium secondary battery

The same process as in Example 1 was performed to prepare a positive electrode for a lithium secondary battery, except that to each of the upper and lower parts of the perforated aluminum foil current collector (Dexmet company, USA), an electrically conductive material (carbon fiber (VGCF), manufactured by Showa Denko company) and a binder (lithium polyacrylate and polyvinyl alcohol) are added in addition to the positive electrode active material (sulfur-carbon nanotube composite in which sulfur and carbon nanotubes are mixed in a weight ratio of 70:30, Cnano Technology company, China). At this time, the contents of the positive electrode active material, the electrically conductive material, lithium polyacrylate, and polyvinyl alcohol contained in the upper portion of the perforated aluminum foil current collector are 87% by weight, 5% by weight, 7% by weight, and 1% by weight, respectively, and the contents of the positive electrode active material, the electrically conductive material, lithium polyacrylate, and polyvinyl alcohol contained in the lower part of the perforated aluminum foil current collector are also 87% by weight, 5% by weight, 7% by weight, and 1% by weight, respectively.

### [Experimental Example 1] Weight measurement and evaluation of positive electrode

The weight of each of the positive electrodes prepared in Example 1 and Comparative Example 1 was measured and confirmed with an electronic balance. As a result, it was confirmed that as the weight of the positive electrode of Comparative Example 3 manufactured using a general metal current collector, an electrically conductive material, and a binder reached about 15 mg/cm², there was a difference in weight depending on whether the current collector was punctured. On the other hand, the positive electrode of Example 1 in which the perforated current collector was used and the electrically conductive material and binder were not used was only about 10 mg/cm² in weight. Based on the above results, it was confirmed that the weight of the positive electrode was changed not small, depending on not only the difference in whether or not to use perforated current collector, but also the difference in the presence or absence of an electrically conductive material/binder.

### [Example 2, Comparative Examples 3-4] Preparation of lithium secondary battery

The positive electrodes prepared in Example 1 and Comparative Examples 1 and 2 were positioned so as to face negative electrodes (Li metal foils), and then, a polyethylene separator was interposed therebetween, and then an electrolyte solution prepared by dissolving LiFSI at a concentration of 1 M in a dimethyl ether solvent was injected to manufacture a lithium-sulfur battery in the form of a pouch cell with an energy of 30 Wh.

### [Experimental Example 2] Evaluation of energy density of battery

The energy density of the lithium secondary batteries prepared in Example 2 and Comparative Example 3 was evaluated. As a result of the evaluation, not only the weight was the lightest, but also the battery of Example 2 in which an electrically conductive material and binder, which were known as a factor of reducing energy density, were not used, exhibited a relatively superior energy density value compared to the battery of Comparative Example 3. Through this, it can be seen that the use of a perforated current collector and the non-addition of an electrically conductive material/binder show a significant synergy effect.

### [Experimental Example 3] Evaluation of discharging capacity of battery

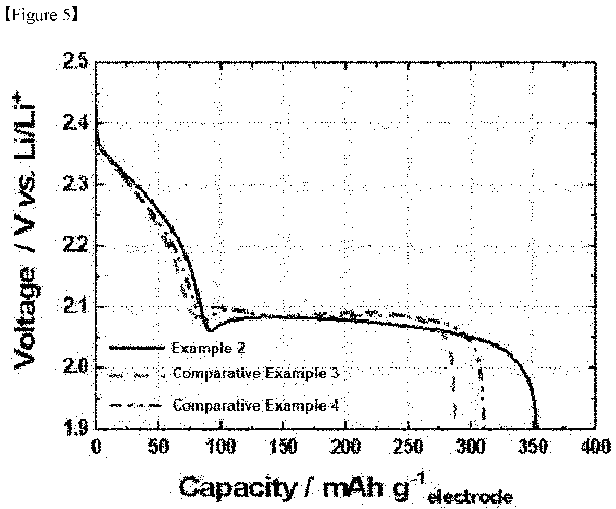

For the lithium-sulfur batteries prepared in Example 2 and Comparative Examples 3 and 4, discharging capacity was evaluated at a charging current of 0.1 C and a voltage from 1.9 V to 2.5 V, and the results are shown in FIG. 5. FIG. 5 is a graph comparing discharging capacities of lithium-sulfur batteries according to an example of the present invention and comparative examples.

As a result of evaluating the discharging capacities of the lithium-sulfur batteries as described above, it was confirmed, as shown in FIG. 5, that the lithium-sulfur battery of Example 2, in which the perforated current collector was used but the electrically conductive material and the binder were not used, has superior cell performance compared to the lithium-sulfur battery of Comparative Example 3 using a conventional metal current collector and the lithium-sulfur battery of Comparative Example 4 comprising the electrically conductive material and the binder while using the perforated current collector. Through this, it can be seen that the use of a perforated current collector and the non-addition of an electrically conductive material/binder show a significant synergy effect.

## Claims

1. An electrode for a lithium secondary battery comprising,
a first electrode active material layer;
a second electrode active material layer; and
a perforated current collector interposed between the first electrode active material layer and the second electrode active material layer,
wherein the first electrode active material layer and the second electrode active material layer are combined through perforations of the current collector,
**characterized in that**:
the electrode for the lithium secondary battery does not contain an electrically conductive material and a binder, and
the first and second electrode active material layers contain sulfur (S).

2. The electrode for the lithium secondary battery according to claim 1, wherein the first and second electrode active material layers comprise a sulfur-carbon composite.

3. The electrode for the lithium secondary battery according to claim 1, wherein the electrode for the lithium secondary battery does not contain moisture.

4. The electrode for the lithium secondary battery according to claim 1, wherein the perforated current collector is a perforated metal foil, perforated conductive film, or perforated conductive sheet.

5. The electrode for the lithium secondary battery according to claim 1, wherein the electrode for the lithium secondary battery is a positive electrode for a lithium secondary battery, the first electrode active material layer is a first positive electrode active material layer, and the second electrode active material layer is a second positive electrode active material layer.

6. A method for manufacturing the electrode for a lithium secondary battery according to claim 1 comprising the steps of,
(a) filling the mold with an appropriate amount of an electrode active material (the first filling), and then placing a perforated current collector on top of it and filling the electrode active material on top of it again (the second filling);
(b) applying pressure to the complex of the electrode active material filled in the mold and the current collector; and
(c) separating the pressure-applied complex from the mold.

7. The method for manufacturing an electrode for the lithium secondary battery according to claim 6, wherein the first filled electrode active material and the second filled electrode active material in step (a) are each filled in equal amounts so that the perforated current collector is located in the center of the electrode in the height direction.

8. The method for manufacturing an electrode for the lithium secondary battery according to claim 6, wherein the pressure in step (b) is applied to the complex for 1 to 10 seconds.

9. The method for manufacturing an electrode for the lithium secondary battery according to claim 6, wherein the complex in step (c) does not contain an electrically conductive material and a binder.

10. The method for manufacturing an electrode for the lithium secondary battery according to claim 8, wherein the method of manufacturing the electrode for the lithium secondary battery does not include mixing, coating, drying, and punching of the electrode.

11. The method for manufacturing an electrode for the lithium secondary battery according to claim 6, wherein during the pressurization in step (b), heating is also performed together.

12. A lithium secondary battery comprising at least one electrode for the lithium secondary battery of claim 1.

13. The lithium secondary battery according to claim 12, wherein the lithium secondary battery is a lithium-sulfur battery.

## Patentansprüche

1. Elektrode für eine Lithiumsekundärbatterie, umfassend
eine erste Elektrodenaktivmaterialschicht,
eine zweite Elektrodenaktivmaterialschicht und
einen perforierten Stromkollektor, der zwischen der ersten Elektrodenaktivmaterialschicht und der zweiten Elektrodenaktivmaterialschicht eingefügt ist,
wobei die erste Elektrodenaktivmaterialschicht und die zweite Elektrodenaktivmaterialschicht durch Perforationen des Stromkollektors miteinander verbunden sind,
**dadurch gekennzeichnet, dass**:
die Elektrode für eine Lithiumsekundärbatterie kein elektrisch leitfähiges Material und kein Bindemittel enthält und
die erste und zweite Elektrodenaktivmaterialschicht Schwefel (S) enthalten.

2. Elektrode für die Lithiumsekundärbatterie gemäß Anspruch 1, wobei die erste und zweite Elektrodenaktivmaterialschicht ein Schwefel-Kohlenstoff-Komposit umfassen.

3. Elektrode für die Lithiumsekundärbatterie gemäß Anspruch 1, wobei die Elektrode für die Lithiumsekundärbatterie keine Feuchtigkeit enthält.

4. Elektrode für die Lithiumsekundärbatterie gemäß Anspruch 1, wobei der perforierte Stromkollektor eine perforierte Metallfolie, ein perforierter leitfähiger Film oder perforiertes leitfähiges Blech ist.

5. Elektrode für die Lithiumsekundärbatterie gemäß Anspruch 1, wobei die Elektrode für die Lithiumsekundärbatterie eine positive Elektrode für eine Lithiumsekundärbatterie ist, die erste Elektrodenaktivmaterialschicht eine erste positive Elektrodenaktivmaterialschicht ist und die zweite Elektrodenaktivmaterialschicht eine zweite positive Elektrodenaktivmaterialschicht ist.

6. Verfahren zur Herstellung der Elektrode für eine Lithiumsekundärbatterie gemäß Anspruch 1, umfassend die Schritte
(a) Befüllen der Form mit einer geeigneten Menge eines Elektrodenaktivmaterials (erste Befüllung) und anschließendes Platzieren eines perforierten Stromkollektors darauf und erneutes Befüllen mit dem Elektrodenaktivmaterial darauf (zweite Befüllung),
(b) Ausüben eines Drucks auf den Komplex aus dem in die Form gefüllten Elektrodenaktivmaterial und den Stromkollektor und
(c) Abtrennen des unter Druck stehenden Komplexes von der Form.

7. Verfahren zur Herstellung einer Elektrode für die Lithiumsekundärbatterie gemäß Anspruch 6, wobei das erste befüllte Elektrodenaktivmaterial und das zweite befüllte Elektrodenaktivmaterial in Schritt (a) jeweils in gleichen Mengen befüllt werden, so dass sich der perforierte Stromkollektor in der Mitte der Elektrode in Höhenrichtung befindet.

8. Verfahren zur Herstellung einer Elektrode für die Lithiumsekundärbatterie gemäß Anspruch 6, wobei der Druck in Schritt (b) auf den Komplex für 1 bis 10 Sekunden ausgeübt wird.

9. Verfahren zur Herstellung einer Elektrode für die Lithiumsekundärbatterie gemäß Anspruch 6, wobei der Komplex in Schritt (c) kein elektrisch leitfähiges Material und kein Bindemittel enthält.

10. Verfahren zur Herstellung einer Elektrode für die Lithiumsekundärbatterie gemäß Anspruch 8, wobei das Verfahren zur Herstellung der Elektrode für die Lithiumsekundärbatterie kein Mischen, Beschichten, Trocknen und Stanzen der Elektrode einschließt.

11. Verfahren zur Herstellung einer Elektrode für die Lithiumsekundärbatterie gemäß Anspruch 6, wobei während der Druckbeaufschlagung in Schritt (b) auch eine Erwärmung erfolgt.

12. Lithiumsekundärbatterie, umfassend mindestens eine Elektrode für die Lithiumsekundärbatterie nach Anspruch 1.

13. Lithiumsekundärbatterie gemäß Anspruch 12, wobei die Lithiumsekundärbatterie eine Lithium-Schwefel-Batterie ist.

## Revendications

1. Électrode pour une batterie secondaire au lithium comprenant,
une première couche de matériau actif d'électrode ;
une deuxième couche de matériau actif d'électrode ; et
un collecteur de courant perforé interposé entre la première couche de matériau actif d'électrode et la deuxième couche de matériau actif d'électrode,
dans laquelle la première couche de matériau actif d'électrode et la deuxième couche de matériau actif d'électrode sont combinées à travers des perforations du collecteur de courant,
**caractérisée en ce que** :
l'électrode pour la batterie secondaire au lithium ne contient ni matériau électroconducteur ni liant, et
les première et deuxième couches de matériau actif d'électrode contiennent du soufre (S).

2. Électrode pour la batterie secondaire au lithium selon la revendication 1, dans laquelle les première et deuxième couches de matériau actif d'électrode comprennent un composite soufre-carbone.

3. Électrode pour la batterie secondaire au lithium selon la revendication 1, dans laquelle l'électrode pour la batterie secondaire au lithium ne contient pas d'humidité.

4. Électrode pour la batterie secondaire au lithium selon la revendication 1, dans laquelle le collecteur de courant perforé est une feuille métallique perforée, un film conducteur perforé ou une feuille conductrice perforée.

5. Électrode pour la batterie secondaire au lithium selon la revendication 1, dans laquelle l'électrode pour la batterie secondaire au lithium est une électrode positive pour une batterie secondaire au lithium, la première couche de matériau actif d'électrode est une première couche de matériau actif d'électrode positive et la deuxième couche de matériau actif d'électrode est une deuxième couche de matériau actif d'électrode positive.

6. Procédé de fabrication de l'électrode pour une batterie secondaire au lithium selon la revendication 1, comprenant les étapes suivantes :
(a) l'introduction d'une quantité appropriée d'un matériau actif d'électrode (la première introduction) dans le moule, puis la mise en place d'un collecteur de courant perforé par-dessus et l'introduction à nouveau du matériau actif d'électrode par-dessus (la deuxième introduction) ;
(b) l'application d'une pression au complexe du matériau actif d'électrode introduit dans le moule et du collecteur de courant ; et
(c) la séparation du complexe auquel une pression a été appliquée du moule.

7. Procédé de fabrication d'une électrode pour la batterie secondaire au lithium selon la revendication 6, dans lequel le matériau actif d'électrode introduit lors de la première introduction et le matériau actif d'électrode introduit lors de la deuxième introduction à l'étape (a) sont chacun introduits en quantités égales de sorte que le collecteur de courant perforé soit situé au centre de l'électrode dans la direction de hauteur.

8. Procédé de fabrication d'une électrode pour la batterie secondaire au lithium selon la revendication 6, dans lequel la pression à l'étape (b) est appliquée au complexe pendant 1 à 10 secondes.

9. Procédé de fabrication d'une électrode pour la batterie secondaire au lithium selon la revendication 6, dans lequel le complexe à l'étape (c) ne contient ni matériau électroconducteur ni liant.

10. Procédé de fabrication d'une électrode pour la batterie secondaire au lithium selon la revendication 8, dans lequel le procédé de fabrication de l'électrode pour la batterie secondaire au lithium n'inclut pas de mélange, ni d'enduction, ni de séchage, ni de poinçonnage de l'électrode.

11. Procédé de fabrication d'une électrode pour la batterie secondaire au lithium selon la revendication 6, dans lequel, lors de l'application d'une pression à l'étape (b), un chauffage est également réalisé.

12. Batterie secondaire au lithium comprenant au moins une électrode pour la batterie secondaire au lithium selon la revendication 1.

13. Batterie secondaire au lithium selon la revendication 12, dans laquelle la batterie secondaire au lithium est une batterie au lithium-soufre.
